# EUROPEAN PATENT APPLICATION

(11) **EP 0 752 639 A1**
(43) Date of publication of application: **08.01.1997**
(21) Application number: 96110395.9
(22) Date of filing: 27.06.1996
(51) Int. Cl.: G06F 3/023, G06K 11/18, G06K 11/08

(54) **Chordic keyboard with integral mouse**

(30) Priority: 07.07.1995 US 499278
(71) Applicant: SUN MICROSYSTEMS, INC., Mountain View, California 94043-1100 (US)
(72) Inventor: Shirriff, Kenneth W., Mountain View, CA 94043 (US)
(74) Representative: Rasch, Michael

(57) **Abstract**

A combination chordic computer keyboard is combined with a mouse. The device has a body (11) shaped to fit a hand. The bottom of the body is aperture either for a mouse roller or optical sensor or other means to sense movement of the body (11) and then actuate a courser as in conventional mouse technology. In the preferred embodiment there are for keys (14) for the fingers and four different keys (16) which may be selectively pressed by the thumb. By pressing several keys at once ("chords"), alphanumeric characters and computer control characters including letters and digits may be input into computer in accordance with a language encoding scheme.

## Description

### BACKGROUND OF THE INVENTION

This invention relates to a new and improved keyboard for inputting to a computer wherein several keys are pressed simultaneously to produce a "chord" and wherein the body which supports the keyboard is movable over a support surface similar to a conventional mouse. Thus the body supporting the chordic keyboard may be moved relative to its support surface to perform computer functions similar to those of a mouse.

Chordic keyboards are known in the art. They comprise stationary bodies which are shaped to support the hand of the user and contain one key for each finger and plural keys for the thumb. They input words and phrases by entering combinations of two or more keys.

The computer mouse is well known in the industry. The body of the mouse is moved over a support surface and the movement is sensed either by a roller on the bottom of the mouse or an optical device or other means.

The present invention combines a mouse and its mouse function with the body of the chordic keyboard.

### SUMMARY OF THE INVENTION

The top of the body of the device is shaped to receive and support the hand of the user. At least five keys are provided to be operated by one hand by pressing one or more keys simultaneously. Preferably, there are four keys which may be selectively pressed by the thumb. By pressing various chords, signals may be input into the computer similar to the standard typewriter style keyboard.

The body of the device is moveable over a support surface and its movement is sensed in accordance with conventional techniques for sensing movement of a computer mouse. Included among these sensing means are a roller or ball which is exposed through the bottom of the mouse to engage the support surface and optical means known in the industry.

Unlike a regular keyboard, a chordic keyboard is small and shaped to fit the hand. This allows the entire keyboard to be easily moved. With the addition of a sensor underneath, the chorded keyboard can then function as a mouse. This allows mouse motion without moving the hands from the keyboard. In fact, the user can continue typing while providing mouse motion. This avoids wasted time due to hand and arm movement. It also may avoid repetitive-motion injuries that can result from use of a regular keyboard. Because the chordic keyboard only requires one hand, it may be useful in environments where only one hand is available to use the keyboard. Finally, by combining the chordic keyboard and the mouse, desk space is saved because the space required by the standard keyboard is freed.

In this invention, the functions of the buttons on a standard mouse may be provided by chord patterns. Alternatively, additional non-chorded buttons may provide these operations.

The chordic keyboard/mouse is also useful for portable computers because the bulky keyboard is eliminated. Instead, only the mouse with integral chordic keyboard is required.

The invention provides a keyboard and mouse input that: a) Avoids inefficient movement of the hands between the keyboard and the mouse; b) Provides fast input; c) Supports the hand to prevent repetitive-motion injuries.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a top plan view of the body of the device of the present invention.
Figure 2 is a bottom plan view thereof.
Fig. 3 is a bottom plan of a modification.
Fig. 4 is a plan view in reduced scale of a pad over which the modification of Fig. 3 moves.

### DETAILED DESCRIPTION OF THE PREFERRED EMBODIMENTS

Reference will now be made in detail to the preferred embodiments of the invention, examples of which are illustrated in the accompanying drawings. While the invention will be described in conjunction with the preferred embodiments, it will be understood that they are not intended to limit the invention to those embodiments. On the contrary, the invention is intended to cover alternatives, modifications and equivalents, which may be included within the spirit and scope of the invention as defined by the appended claims.

The present device is intended for use with a standard computer (not shown). Such computers receive signals both from a mouse and a keyboard. The conventional mouse is hand held and is moved along a supporting surface, its movement being sensed and the sensed signal being input into the computer to move a cursor and to perform certain well-known functions.

Conventional computers are controlled by a keyboard which is usually in typewriter keyboard form. However, chordic keyboards are known in the art. Such chordic keyboards are actuated by depressing one or more finger buttons or switches. Further versatility to the keyboard may be achieved by thumb buttons. Details of chordic keyboards are disclosed in Lu and Aghazadah, Infogrip Chordic Keyboard Evaluation, Proceeding of the Human Factors Society, 36th Annual Meeting, Vol. 1, Pages 268-271 (1992) and INFOGRIP, Inc. 1990, Preliminary user manual for Infogrip Chordic Keyboard. These publications are incorporated herein by reference.

The present invention combines in one body the function of the mouse and of the chordal keyboard. Thus by moving the body of the device over the supporting surface the mouse function is performed and by depressing buttons for the fingers and thumb on the top surface, the keyboard functions are performed and the mouse position input into the computer.

The device is shown schematically in the accompanying drawings, it being understood that the shape of the body and the locations of the buttons are subject to wide variation.

As shown, body 11 has a top 12 which is shaped with a depression 13 to accommodate the hand of the user. At one end of the top 12 are finger buttons 14a, 14b, 14c, 14d positioned so that the fingertips of the user's hand resting on said depression 13 may conveniently depress the buttons. To one side of the buttons 14a-d are a plurality of thumb buttons 16a, b, c and d located close together so that the thumb of the user may depress any one of the thumb buttons. By depressing one button 16a-d or plural finger buttons 14a-d simultaneously, a "chord" may be struck. Further, the chord may be varied by the thumb buttons. The signals produced by the chords are input into the computer by cable 18.

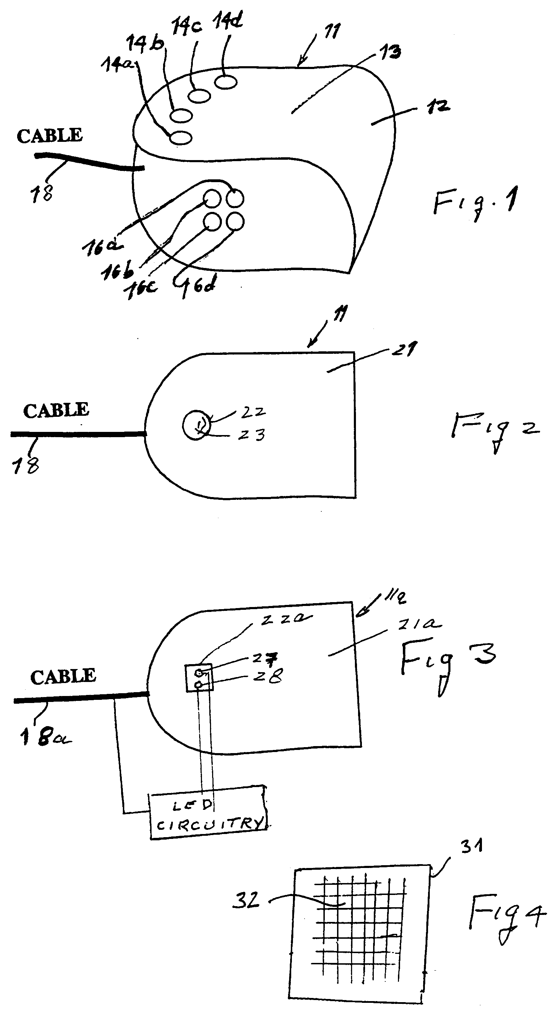

The bottom 21 of body 11 is preferably flat and may be formed with an opening 22. As shown in Fig 2, the roller or ball 23 used in a conventional mouse extends slightly through the opening 22 to engage the surface upon which the bottom 21 moves.

In use, the operator places a hand in the depression 13 and moves body 11 along the supporting surface, the movement being sensed and transmitted via cable 18 to the computer and employed in the computer as in conventional mouse techniques. Without removing the hand from the depression 13, the operator's thumb may engage any one of the thumb buttons 16a, b, c, d and the fingers may be used to depress any one or more of the finger buttons 14a, b, c, d. Hence, signals similar to any keyboard signals may be transmitted to the computer and also a signal similar to the "click" sent to the computer by depressing a button on a conventional mouse.

In the modification of Figs. 3 and 4, an optical type mouse is used. Bottom 21a of body 11a is smooth so that it may slide freely over a supporting surface. A preferred surface is mat 31 shown in Fig. 4 provided with a grid 32. An LED 27 emits light through opening 22a and movement relative to the support surface is sensed by photo sensor 28. As body 21a moves over pad 31 signals are transmitted to LED circuitry and thence via cable 18a, or other means to the computer.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A combined chordic keyboard and mouse device comprising a body (11, 11a) shaped to fit under one hand of the user when the user's hand is palm down, said device having a top (12), four finger keys (14) recessed into said top (12) positioned to underlie the location of the tips of the four fingers of said one hand of the user,
and at least one thumb key (16) positioned to underlie the thumb of the user when the four fingers of the user's one hand rest on said four finger keys (14),
whereby, without removing the user's hand from the device, chords of keys may be depressed by the user depressing any combination of finger keys (14) and at least one thumb key (16) substantially simultaneously, first means (18, 18a) to transmit to a computer first signals emitted by depressing said chord of keys (14, 16),
said body (11) having a bottom (21, 21a) shaped to slide over a supporting surface, an aperture (22, 22a) in said bottom (21, 21a), a sensor (28) extending through said aperture (22) to sense movement of said body (11) relative to said supporting surface and second means to transmit to said computer second signals from said sensor (28) whereby movement of said body (11) emits said second signals to said computer.

2. A combined chordic keyboard and mouse device comprising a body (11, 11a) shaped to fit under one hand of the user when the user's hand is palm down, said device having a top (12), four finger keys (14) recessed into said top positioned to underlie the location of the tips of the four fingers of said one hand of the user,
and at least one thumb key (16) positioned to underlie the thumb of the user when the four fingers of the user's one hand rest on said four finger keys (14),
whereby, without removing the user's hand from the device, chords of keys may be depressed by the user depressing any combination of finger keys (14) and at least one thumb key (16) substantially simultaneously,
means for sensing depressing of one more said finger keys (14) and generating first signals identifying alphanumeric characters in response to said sensing,
first means to transmit to said computer said first signals generated by depressing said chord of keys,
said body (11) having a bottom (21) shaped to slide over a supporting surface, an aperture (22) in said bottom (21), a sensor including a ball (23) extending through said aperture (22) to roll over said supporting surface and sense movement of said body (11) relative to said supporting surface and second means to transmit to said computer second signals from said sensor, whereby movement of said body (11) emits said signals to said computer.

3. A device according to Claim 1, wherein said signals emitted by depressing said chord of keys include first signals identifying alphanumeric characters.

4. A device according to Claim 2 or 3, wherein said first signals emitted by depressing said chord of keys further include signals identifying control characters.

5. A device according to Claim 4, wherein first said signals emitted by depressing said chord of keys include signals identifying alphanumeric and control characters corresponding to the alphanumeric and control characters of a QWERTY keyboard.

6. A device according to Claim 1 in which said sensor comprises a ball (23) to roll over said supporting surface.

7. A device according to Claim 1 in which said sensor comprises a light emitting means (27) and a light receiving means (28).

8. A device according to Claim 7 in which said supporting surface is formed with a grid (32).

9. A device according to Claim 7 in which said supporting surface comprises a pad (31) formed with a grid (32).

10. A device according to Claim 1 or 2 in which said top (12) is provided with a depression (13) shaped to receive the hand of a user.

11. A device according to Claim 1 or 2 in which there is a plurality of thumb keys (16) positioned to be selectively depressed by a thumb of a user whose hand rests on said device.
